# EUROPEAN PATENT SPECIFICATION

(11) **EP 3 877 598 B1**
(45) Date of publication and mention of the grant of the patent: **01.01.2025**
(21) Application number: 19829344.1
(22) Date of filing: 04.11.2019
(51) Int. Cl.: E04B 1/14, E04B 1/80, E04C 2/24, E04C 2/28, E04C 2/296, E04D 3/35, B32B 9/04, E04B 7/22

(54) **CONSTRUCTION PANEL FOR USE AS SELF-SUPPORTING WALL PANEL OR ROOF PANEL**
BAUPLATTE ZUR VERWENDUNG ALS SELBSTTRAGENDE WAND- ODER DACHPLATTE
PANNEAU DE CONSTRUCTION DESTINÉ À ÊTRE UTILISÉ COMME PANNEAU MURAL OU PANNEAU DE TOIT AUTOPORTEUR

(30) Priority: 09.11.2018 NL 1043075
(43) Date of publication of application: 15.09.2021
(73) Proprietor: Rc Panels Holding B.V., 8152 GA Lemelerveld (NL)
(72) Inventor: KLEIN, Carlos, 8152 GA Lemelerveld (NL)
(74) Representative: Algemeen Octrooi- en Merkenbureau B.V.
(86) International application number: PCT/NL2019/050722
(87) International publication number: WO 2020/096449

(56) References cited:
- EP-A1- 1 286 007
- WO-A1-2015/160028
- WO-A1-2017/189452
- WO-A1-2018/139675
- WO-A1-2018/194465
- NL-C2- 1 040 849

## Description

The invention relates to a self-supporting construction panel of foamed material with rigid cover layers applied thereupon, intended for use as a self-supporting wall panel or roof panel having a high R-value, according to the preamble of claim 1.

Such a construction panel is known, inter alia, from NL1040849C in the name of the applicant, where in particular the application of the rigid cover layers onto the foamed insulating material is discussed. The present invention includes a further elaboration of what is disclosed in NL1040849C.

According to the present invention a construction panel with the features of claim 1 is provided, which is intended to be used as a self-supporting wall panel or roof panel with a high R-value, comprising a base layer of foamed material of, for example, EPS, provided with a thin (e.g. 1 to 2 mm thick), rigid reinforcement cover layer on one side, hereinafter referred to as the first cover layer, and on the other side also provided with a thin, rigid reinforcement cover layer, hereinafter referred to as the second cover layer. The layers are either directly applied to the base layer (e.g. by gluing), or by means of an intermediate layer of a material, which is suitable for receiving screws, for example chipboard or plywood. Furthermore, the transverse surfaces of the construction panel, not being covered by the cover layers, are covered with a layer of polyurea, polyester or epoxy (industrially) applied thereupon.

Because the base plate, which in itself has only a limited firmness, is covered on both sides by the first and second cover layer (plate), provided thereupon e.g. by gluing, the firmness of the whole (the sandwich) assembly is considerably improved. However, by also covering the transverse surfaces with a layer of polyurea, polyester or epoxy (https://en.wikipedia.org/wiki/Polyurea, https://en.wikipedia.org/wiki/Polyester, https://en.wikipedia.org/wiki/Epoxy) a construction panel is obtained, that is eminently suitable as an autonomous and self-supporting construction element, that is suitable for functioning as a complete outside wall, replacing, for example, a traditional outside wall or side wall having inner and outer leaves, wherein between the leaves a cavity is provided, optionally filled with cavity wall insulation. The two cover layers (plates) arranged on the base layer in combination with a reinforcement sealing layer of polyurea, polyester or epoxy on the (all) transverse surfaces provide for a lightweight and rigid structural construction panel having excellent insulation properties but also having excellent water and moisture resistance.

In addition to the use as a wall panel (plate), the construction panel according to the invention is also suitable for use as a roof panel (plate), because of its high rigidity (in particular when one (or both) of its rigid cover layers is made of steel, see below). As a result, it is not necessary to use (wooden) beams (rails) as support, which would act as a thermal bridge and therefore have a negative effect on the thermal insulation value (R-value; see for example https://en.wikipedia.org/wiki/Thermal_resistance). Therefore, the invention provides for wall panels or roof panels (wall or roof plates) which can replace the current traditional (structural and insulating) walls and roof plates, whereby a simpler and lighter construction is obtained, having substantially higher insulation values.

The respective first and second cover layers (plates) can be made of, for example, fibre-reinforced, thermosetting plate material such as glass-fibre-reinforced polyester plate, but can also be made of OSB ("Oriented Strand Board"; https://en.wikipedia.org/wiki/Oriented_Beach_Board) or, in particular when using the construction panels according to the invention as roofing sheets, can be made of steel sheet.

For a traditional appearance of the construction panels according to the invention, a layer of brick strips or decorative plaster can be applied onto the first cover layer as a covering layer. Similarly, construction panels according to the invention, when used as roofing sheets, may be provided with a more or less traditional outer layer. Of course, the construction panels according to the invention may also be provided with other, less traditional, covering layers.

A construction panel according to the invention may comprise one or more recesses for a door or window, provided in the construction panel by, for example, milling or by means of water or laser cutting. The outer transverse surfaces of the construction panel, and also the transverse surfaces of the recesses, are covered with a layer of polyurea, polyester or epoxy (industrially applied thereto). As a result, the base layer, which would be exposed to the environment through the door and/or window recesses and thus to the environmental influences (in particular moisture and other weather influences, such as UV radiation from the sun), is completely sealed off from those environmental influences by the polyurea, polyester or epoxy layer. Moreover, the polyurea, polyester or epoxy layer may serve as a rigid fastening layer for further construction elements, such as window frames, to be provided in those recesses, so that the elements can be sturdily applied to the polyurea, polyester or epoxy layer by adhesion, adhesives, screws etcetera.

The recesses arranged in the construction panel, of which the transverse surfaces are covered with a layer of polyurea, polyester or epoxy (industrially applied thereupon), may be profiled, viewed in cross-section, for the purpose of receiving and/or supporting a construction element to be placed and/or mounted into the recess; for example a window frame cooperating with that profile or a transparent or translucent panel to be arranged therein (for example frame-free), such as a windowpane or skylight. These and other options will be further elaborated below.

The invention will now be further discussed with reference to the figure description below.

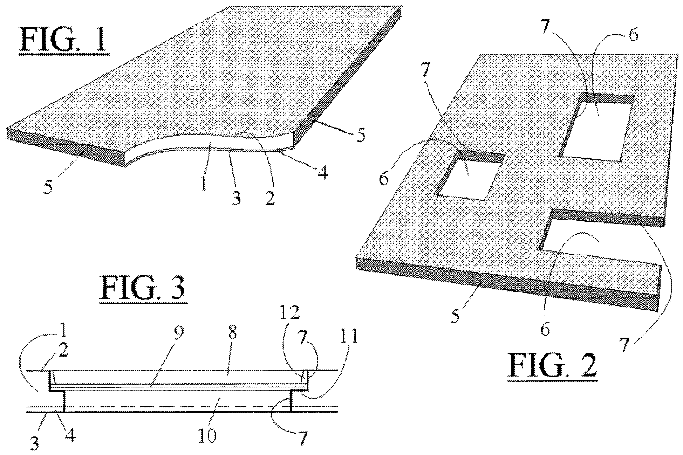

- Figures 1 - 6: schematically show different embodiments of a construction panel according to the invention, or of details thereof.

Figures 1 - 6 show a construction panel according to the invention, intended to be used as a self-supporting (outer) wall panel or roof panel having a high R-value, comprising a base layer 1 of foamed material of, for example, EPS (https://en.wikipedia.org/wiki/Polystyrene#Expanded_polystyrene_(EPS)), which on one side is provided with a thin, rigid reinforcement cover layer, for example by gluing, hereinafter referred to as the first cover layer 2. On the other side also a thin, rigid reinforcement cover layer is provided, hereinafter referred to as the second cover layer 3. The cover layers are either directly applied to the base layer or, as shown in Figure 1, by means of an intermediate layer of a, for example, woody material, which is suitable for screwing in screws. The transverse surfaces (end faces, side faces) 5 of the construction panel, not covered by the cover layers 1 and 2, are covered with a layer of polyurea, polyester or epoxy (industrially) applied thereupon. A layer of brick strips (not explicitly shown) is provided on the first cover layer 1 by means of gluing, which serves as a covering layer for the exterior of the building, of which the construction panel is part of.

Figure 2 shows a construction panel according to the invention having a number of recesses 6 for a door or window, wherein the transverse surfaces (side surfaces) 7 of the recesses 6, as well as the transverse surfaces 5, are covered with a layer of polyurea, polyester or epoxy (industrially) applied thereupon.

Figure 3 shows in cross-section a part of a construction panel, which is provided with a recess 6. The transverse surfaces 7 of the recess are covered with a layer of polyurea, polyester or epoxy (industrially) applied thereupon (also indicated by reference numeral 7). The recess 6 comprises, as seen in cross-section, a first portion 8 whose dimensions correspond to those of a windowpane 9 to be placed therein. Furthermore, the recess comprises a second portion 10 of which the circumferential dimensions are smaller such, that a circumferential stop 11 is formed, which supports the windowpane 9 along its circumference. On the other side of the windowpane, glazing beads 12 may be fitted against the inside of the recess, anchoring the windowpane 9 to the construction panel. For instance, the glazing beads 12 may be screwed into the polyurea, polyester or epoxy layer 7, since polyurea, polyester and epoxy are well suited for this purpose. Thus, by providing a profiled recess with (for example) a stop 11 or a differently shaped stop and/or notch(s) in the transverse surface, a windowpane (or other panel) may be mounted frame-free into a construction panel according to the invention.

Instead of a windowpane 9 or panel, a profiled recess 6 in an adapted form, covered with a layer of polyurea, polyester or epoxy 7, an example of which is shown in Figure 3, may also be used for fitting in a window frame or door frame. The recess 6, as seen in cross-section, also comprises, for example, a first portion of which the dimensions correspond to those of a window frame or a door frame to be placed therein, and comprises a second portion of which the circumferential dimensions are smaller in such a way, that the window frame along its circumference rests against the second portion. Because the window frame can be screwed directly into the (suitable) layer of polyurea, polyester or epoxy 7 (or secured against it by means of, for example, threaded nails which can be shot into the polyurea, polyester or epoxy layer), it is not necessary to use a so-called setting frame when mounting a frame, as is customary in traditional building construction.

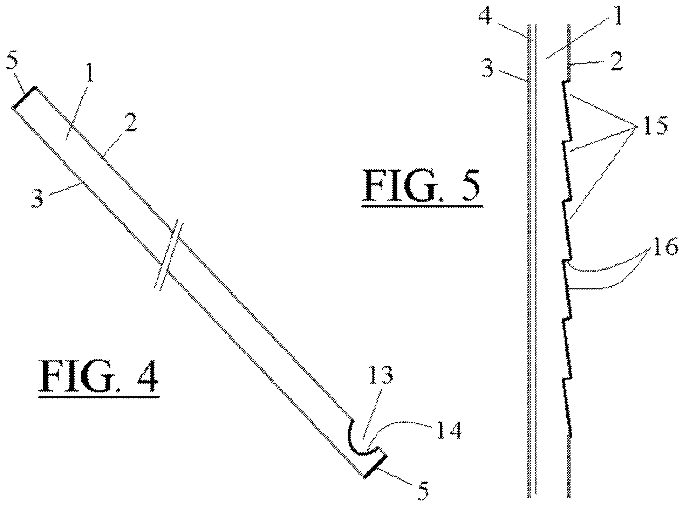

Of a construction panel according to the invention, one or more portions of the outer surface of the base layer 1 of foamed material, including the relevant outer cover layer 2, may be industrially slotted and/or milled, after which the surface of that one or more slotted and/or milled portion is industrially covered with a layer of polyurea, polyester or epoxy. Figure 4 shows an example of such a construction panel intended for use as a roof panel. The roof panel shown in Figure 4 comprises a gutter 13, which is milled out in an edge region of the panel, the surface of which is covered with a layer of polyurea, polyester or epoxy 14 (industrially) applied thereupon. The gutter 13 covered with polyurea, polyester or epoxy is intended for use as a roof gutter for the construction panel intended for use as a roof panel.

Figure 5 shows an exemplary embodiment of a construction panel, in which a portion of the outer surface of the base layer 1 of foamed material, including the outer cover layer 2, is cut out and/or milled in such a way that, as seen in cross-section, a profile 15 is formed, for example of a clapboard wall, and wherein the surface of said one or more milled portions is covered with a layer of polyurea, polyester or epoxy 16 (industrially) applied thereupon.

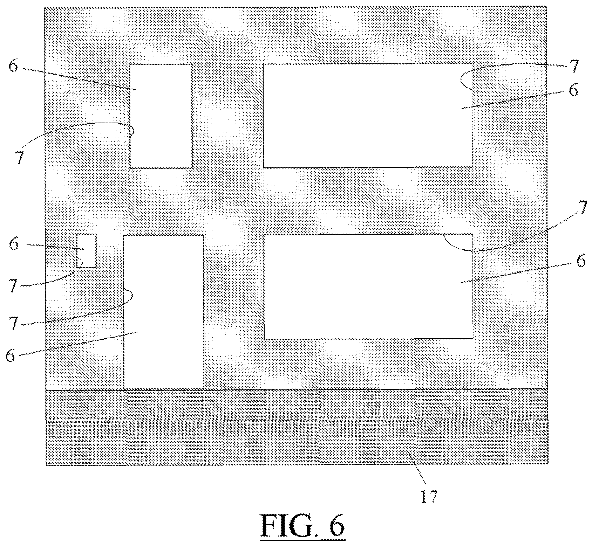

Figure 6 shows an exemplary embodiment of a construction panel intended for use as an outer wall panel. A portion 17 of the wall panel is intended to be installed below ground level (i.e. in the earth's surface). There (i.e. under ground level), relatively unfavourable influences can or will be exerted from the outside onto the surface of the construction panel. In particular, the construction panel will have to be resistant against, for example, moisture, plant or tree roots, rodents. For that reason, the portion 17 is preferably (industrially) covered with a layer of polyurea, polyester or epoxy. This layer is applied on top of the (already applied) first (rigid yet fairly thin) cover layer 2 during the manufacture of the construction panel. It should be noted here, that in traditional building construction, a so-called side board is often applied as an (extra) protection of the portion of a conventional outside wall that extends into the ground below ground level. Consequently, this side board is no longer necessary if, instead thereof, an (extra) layer of polyurea, polyester or epoxy is applied to the portion 17.

Therefore, all embodiments shown provide for a construction panel, which is constructively up to the mark and which has a very high insulation value and which is protected on all sides against environmental influences such as moisture and UV, but also against mechanical damage etcetera.

## Claims

1. Construction panel intended for use as a self-supporting wall panel or roof panel having a high R-value, comprising a base layer (1) of foamed material of, for example, EPS, with a thin, rigid reinforcement cover layer on one side, hereinafter referred to as the first cover layer (2), and on the other side also a thin, rigid reinforcement cover layer, hereinafter referred to as the second cover layer (3), either directly applied to the base layer, or by means of an intermediate layer (4) of a material, which is suitable for screws, the construction panel having side surfaces, wherein the side surfaces are not covered by the cover layers (1, 2), **characterised, in that** the side surfaces of the construction panel covered with a layer of polyurea, polyester or epoxy (5 ,7) applied thereon.

2. Construction panel according to claim 1, wherein a layer of brick strips or decorative plaster is applied to the first cover layer.

3. Construction panel according to claim 1 or 2, comprising one or more recesses (6) for a door or window, wherein the side surfaces of said recesses are covered with a layer of polyurea, polyester or epoxy (7) applied thereon.

4. Construction panel according to claim 3, comprising one or more recesses of which the side surfaces are covered with a layer of polyurea, polyester or epoxy applied thereon, which recesses, as seen in cross-section, are profiled for the purpose of receiving and/or supporting a construction element to be placed and/or mounted into the recess.

5. Construction panel according to claim 3 or 4, comprising one or more recesses for a window, the side surfaces of the recesses are covered with a layer of polyurea, polyester or epoxy applied thereon, which recesses, as seen in cross-section, comprise a first portion (8) of which the dimensions correspond to the dimensions of a windowpane (9) or panel to be placed therein, and a second portion (10) of which the circumferential dimensions are smaller such that, when in use, the windowpane along its circumference rests against the second portion.

6. Construction panel according to claim 3 or 4, comprising one or more recesses for a window or door, covered with a layer of polyurea, polyester or epoxy applied thereto, which recesses, as seen in cross-section, comprise a first portion of which the dimensions correspond to the dimensions of a window frame or a door frame to be placed therein, and a second portion, of which the circumferential dimensions are smaller such that, when in use, the window along its circumference rests against the second portion.

7. Construction panel according to any of the preceding claims, wherein the outer surface of the base layer of foamed material including the cover layer is provided with one or more slotted and/or milled portions (13, 15), and the surface of said one or more portions is covered with a layer of polyurea, polyester or epoxy (14, 16) applied thereon.

8. Construction panel according to claim 7, intended for use as a roof panel, comprising a gutter (13) milled in an edge area, the surface of the gutter is covered with a layer of polyurea, polyester or epoxy (14) applied thereon, which gutter covered with polyurea, polyester or epoxy is intended for use as a roof gutter for the construction panel intended for use as a roof panel.

9. Construction panel according to claim 7, wherein the outer surface of the base layer of foamed material, including the relevant cover layer, is provided with one or more cut out and/or milled portions, such that a profile (15) is formed as seen in cross-section, for example of a clapboard wall, and wherein the surface of said one or more milled portions is covered with a layer of polyurea, polyester or epoxy (16) applied thereon.

10. Construction panel according to one of the preceding claims, for use as wall panel, wherein a portion (17) of the panel, which is intended to be installed below ground level, is provided with a layer of polyurea, polyester or epoxy.

## Patentansprüche

1. Bauplatte, die zur Verwendung als eine selbsttragende Wandplatte oder Dachplatte vorgesehen ist, die einen hohen R-Wert aufweist, umfassend eine Basisschicht (1) aus geschäumtem Material, aus beispielsweise EPS, mit einer dünnen, starren Verstärkungsdeckschicht auf einer Seite, im Folgenden als die erste Deckschicht (2) bezeichnet, und auf der anderen Seite auch einer dünnen, starren Verstärkungsdeckschicht, im Folgenden als die zweite Deckschicht (3) bezeichnet, die entweder direkt oder mittels einer Zwischenschicht (4) aus einem für Schrauben geeigneten Material auf der Basisschicht aufgebracht sind, wobei die Bauplatte Seitenflächen aufweist, wobei die Seitenflächen nicht von den Deckschichten (1, 2) bedeckt sind, **dadurch gekennzeichnet, dass** die Seitenflächen der Bauplatte mit einer darauf aufgebrachten Schicht aus Polyharnstoff, Polyester oder Epoxid (5, 7) bedeckt sind.

2. Bauplatte nach Anspruch 1, wobei auf die erste Deckschicht eine Schicht aus Ziegelstreifen oder Dekorputz aufgebracht ist.

3. Bauplatte nach Anspruch 1 oder 2, umfassend eine oder mehrere Ausnehmungen (6) für eine Tür oder ein Fenster, wobei die Seitenflächen der Ausnehmungen mit einer darauf aufgebrachten Schicht aus Polyharnstoff, Polyester oder Epoxid (7) bedeckt sind.

4. Bauplatte nach Anspruch 3, umfassend eine oder mehrere Ausnehmungen, deren Seitenflächen mit einer darauf aufgebrachten Schicht aus Polyharnstoff, Polyester oder Epoxid bedeckt sind, wobei die Ausnehmungen im Querschnitt gesehen zum Zweck einer Aufnahme und/oder Abstützung eines in der Ausnehmung zu platzierenden und/oder einzubauenden Bauelements profiliert sind.

5. Bauplatte nach Anspruch 3 oder 4, umfassend eine oder mehrere Ausnehmungen für ein Fenster, wobei die Seitenflächen der Ausnehmungen mit einer darauf aufgebrachten Schicht aus Polyharnstoff, Polyester oder Epoxid bedeckt sind, wobei die Ausnehmungen im Querschnitt gesehen einen ersten Abschnitt (8), dessen Abmessungen den Abmessungen einer darin zu platzierenden Fensterscheibe (9) oder Platte entsprechen, und einen zweiten Abschnitt (10), dessen Umfangsabmessungen kleiner sind, so dass in Verwendung die Fensterscheibe entlang ihres Umfangs an dem zweiten Abschnitt anliegt, umfassen.

6. Bauplatte nach Anspruch 3 oder 4, umfassend eine oder mehrere Ausnehmungen für ein Fenster oder eine Tür, die mit einer darauf aufgebrachten Schicht aus Polyharnstoff, Polyester oder Epoxid bedeckt sind, wobei die Ausnehmungen im Querschnitt gesehen einen ersten Abschnitt, dessen Abmessungen den Abmessungen eines darin zu platzierenden Fensterrahmens oder Türrahmens entsprechen, und einen zweiten Abschnitt, dessen Umfangsabmessungen kleiner sind, so dass in Verwendung das Fenster entlang seines Umfangs an dem zweiten Abschnitt anliegt, umfassen.

7. Bauplatte nach einem der vorhergehenden Ansprüche, wobei die Außenfläche der Basisschicht aus geschäumtem Material einschließlich der Deckschicht mit einem oder mehreren geschlitzten und/oder gefrästen Abschnitten (13, 15) versehen ist und die Oberfläche des einen oder der mehreren Abschnitte mit einer darauf aufgebrachten Schicht aus Polyharnstoff, Polyester oder Epoxid (14, 16) bedeckt ist.

8. Bauplatte nach Anspruch 7, die zur Verwendung als eine Dachplatte vorgesehen ist, umfassend eine in einen Kantenbereich gefräste Rinne (13), wobei die Oberfläche der Rinne mit einer darauf aufgebrachten Schicht aus Polyharnstoff, Polyester oder Epoxid (14) bedeckt ist, wobei die mit Polyharnstoff, Polyester oder Epoxid bedeckte Rinne zur Verwendung als eine Dachrinne für die als eine Dachplatte vorgesehene Bauplatte vorgesehen ist.

9. Bauplatte nach Anspruch 7, wobei die Außenfläche der Basisschicht aus geschäumtem Material einschließlich der betreffenden Deckschicht mit einem oder mehreren ausgeschnittenen und/oder gefrästen Abschnitten versehen ist, so dass im Querschnitt gesehen ein Profil (15), beispielsweise einer Schindelwand, gebildet ist, und wobei die Oberfläche des einen oder der mehreren gefrästen Abschnitte mit einer darauf aufgebrachten Schicht aus Polyharnstoff, Polyester oder Epoxid (16) bedeckt ist.

10. Bauplatte nach einem der vorhergehenden Ansprüche zur Verwendung als Wandplatte, wobei ein Abschnitt (17) der Platte, der zur Installation unterhalb der Erdoberfläche vorgesehen ist, mit einer Schicht aus Polyharnstoff, Polyester oder Epoxid versehen ist.

## Revendications

1. Panneau de construction à utiliser comme panneau mural ou panneau de toit autoporteur ayant une valeur de résistance thermique élevée, comprenant une couche de base (1) en matériau expansé, par exemple en EPS, avec sur un côté une couche de revêtement de renfort mince et rigide, ci-après appelée première couche de revêtement (2), et sur l'autre côté également une couche de revêtement de renfort mince et rigide, ci-après appelée seconde couche de revêtement (3), appliquées soit directement sur la couche de base, soit au moyen d'une couche intermédiaire (4) en un matériau qui est adapté aux vis, le panneau de construction ayant des surfaces latérales, dans lequel les surfaces latérales ne sont pas recouvertes par les couches de revêtement (1, 2),
**caractérisé en ce que** les surfaces latérales du panneau de construction sont recouvertes d'une couche de polyurée, de polyester ou d'époxy (5, 7) appliquée dessus.

2. Panneau de construction selon la revendication 1, dans lequel une couche de bandes de briques ou de plâtre décoratif est appliquée sur la première couche de revêtement.

3. Panneau de construction selon la revendication 1 ou 2, comprenant un ou plusieurs évidements (6) pour une porte ou une fenêtre, dans lequel les surfaces latérales desdits évidements sont recouvertes d'une couche de polyurée, de polyester ou d'époxy (7) appliquée dessus.

4. Panneau de construction selon la revendication 3, comprenant un ou plusieurs évidements dont les surfaces latérales sont recouvertes d'une couche de polyurée, de polyester ou d'époxy appliquée dessus, lesquels évidements, vus en coupe transversale, sont profilés afin de recevoir et/ou supporter un élément de construction à placer et/ou à monter dans l'évidement.

5. Panneau de construction selon la revendication 3 ou 4, comprenant un ou plusieurs évidements pour une fenêtre, les surfaces latérales des évidements sont recouvertes d'une couche de polyurée, de polyester ou d'époxy appliquée dessus, lesquels évidements, vus en coupe transversale, comprennent une première partie (8) dont les dimensions correspondent aux dimensions d'une vitre (9) ou d'un panneau à y placer, et une seconde partie (10) dont les dimensions circonférentielles sont plus petites de sorte que, lors de l'utilisation, la vitre le long de sa circonférence repose contre la seconde partie.

6. Panneau de construction selon la revendication 3 ou 4, comprenant un ou plusieurs évidements pour une fenêtre ou une porte, recouverts d'une couche de polyurée, de polyester ou d'époxy appliquée dessus, lesquels évidements, vus en coupe transversale, comprennent une première partie dont les dimensions correspondent aux dimensions d'un cadre de fenêtre ou d'un cadre de porte à y placer, et une seconde partie dont les dimensions circonférentielles sont plus petites de sorte que, lors de l'utilisation, la fenêtre le long de sa circonférence repose contre la seconde partie.

7. Panneau de construction selon l'une des revendications précédentes, dans lequel la surface externe de la couche de base en matériau expansé comprenant la couche de revêtement est pourvue d'une ou de plusieurs parties fendues et/ou fraisées (13, 15), et la surface desdites une ou plusieurs parties est recouverte d'une couche de polyurée, de polyester ou d'époxy (14, 16) appliquée dessus.

8. Panneau de construction selon la revendication 7, destiné à être utilisé comme panneau de toit, comprenant une gouttière (13) fraisée dans une zone de bord, la surface de la gouttière est recouverte d'une couche de polyurée, de polyester ou d'époxy (14) appliquée dessus, laquelle gouttière recouverte de polyurée, de polyester ou d'époxy est destinée à être utilisée comme gouttière de toit pour le panneau de construction destiné à être utilisé comme panneau de toit.

9. Panneau de construction selon la revendication 7, dans lequel la surface externe de la couche de base en matériau expansé, comprenant la couche de revêtement concernée, est pourvue d'une ou de plusieurs parties découpées et/ou fraisées, de sorte qu'un profil (15) est formé tel que vu en coupe transversale, par exemple d'un mur à clin, et dans lequel la surface desdites une ou plusieurs parties fraisées est recouverte d'une couche de polyurée, de polyester ou d'époxy (16) appliquée dessus.

10. Panneau de construction selon l'une des revendications précédentes, à utiliser comme panneau mural, dans lequel une partie (17) du panneau, qui est destinée à être installée sous le niveau du sol, est pourvue d'une couche de polyurée, de polyester ou d'époxy.
